# EUROPÄISCHE PATENTSCHRIFT

(11) **EP 3 217 031 B1**
(45) Veröffentlichungstag und Bekanntmachung des Hinweises auf die Patenterteilung: **25.09.2024**
(21) Anmeldenummer: 17159511.9
(22) Anmeldetag: 07.03.2017
(51) Int. Cl.: F16D 13/52, F16D 13/64, F16D 13/68, F16D 25/0638

(54) **LAMELLENKUPPLUNG**
MULTIPLE DISC CLUTCH
EMBRAYAGE À DISQUE

(30) Priorität: 07.03.2016 AT 501822016
(43) Veröffentlichungstag der Anmeldung: 13.09.2017
(73) Patentinhaber: Miba Frictec GmbH, 4663 Laakirchen (AT)
(72) Erfinder: HARTNER, Gerhard, 4654 Bad Wimsbach (AT); MARKOWSKY, Florian, 4810 Gmunden (AT)
(74) Vertreter: Burger, Hannes

(56) Entgegenhaltungen:
- EP-A1- 0 848 176
- EP-A2- 0 260 828
- EP-A2- 0 447 019
- GB-A- 914 220
- JP-A- 2002 242 954
- US-A1- 2007 151 822

## Beschreibung

Die Erfindung betrifft eine nasslaufende Lamellenkupplung umfassend mehrere Innenlamellen und mehrere Außenlamellen, die in axialer Richtung abwechselnd angeordnet sind, wobei jede Innenlamelle einen Innenlamellengrundkörper aufweist, auf dem beidseitig jeweils zumindest ein erster Reibbelag angeordnet ist, und jede Außenlamelle einen Außenlamellengrundkörper aufweist, auf dem beidseitig jeweils zumindest ein zweiter Reibbelag angeordnet ist, und wobei die ersten Reibbeläge in radialer Richtung zur Gänze unterhalb der zweiten Reibbeläge situiert sind, sodass die ersten Reibbeläge bei geschlossener Lamellenkupplung mit den Außenlamellengrundkörpern und die zweiten Reibbeläge bei geschlossener Lammellenkupplung mit den Innenlamellengrundkörpern in Reibkontakt gelangen, wobei die ersten Reibbeläge jeweils erste Nuten mit einer Nuttiefe von bis zu 100 % einer Reibbelagdicke der ersten Reibbeläge und die zweiten Reibbeläge gegebenenfalls zweite Nuten aufweisen, und wobei gegebenenfalls die ersten Nuten in Umfangsrichtung versetzt zu den zweiten Nuten angeordnet sind.

Eine derartige Lamellenkupplung ist aus der US 6,397,997 B2, der US 7,770,708 B2, der US 7,779,980 B2, der US 7,823,712 B2 und aus der US 2007/0151822 A1 bekannt.

In nasslaufenden Lamellenkupplungen wird ein Fluid, in der Regel ein Schmieröl, dazu verwendet, um die durch die Reibung entstehenden Wärme besser abtransportieren zu können. Es soll damit die Überhitzung der Reibbeläge und die daraus resultierende vorzeitige Zerstörung verhindert werden.

Üblicherweise werden die Reibbeläge nur an den Innenlamellen angebracht. Die voranstehend genannten US-Druckschriften beschreiben zum Unterschied dazu Ausführungsformen einer Lamellenkupplung mit Reibbelägen sowohl auf den Innen- als auch auf den Außenlamellen. Es wird damit eine bessere Verteilung der im Reibschluss entstehenden Wärme erreicht, indem nicht nur die Innenlamellen sondern auch die Außenlamellen zur Wärmeabfuhr genutzt werden können.

Der vorliegenden Erfindung liegt die Aufgabe zugrunde, eine Lamellenkupplung zu schaffen, die im Betrieb eine verbesserte Leistungsfähigkeit aufweist.

Gelöst wird die Aufgabe bei der eingangs genannten Lamellenkupplung dadurch, dass die zweiten Reibbeläge ringförmig als geschlossene Ringe ausgebildet sind oder dass für den Fall, dass die zweiten Reibbeläge die zweiten Nuten aufweisen, diese zweiten Nuten eine kleinere Querschnittsfläche aufweisen, im Längsverlauf der zweiten Nuten betrachtet, als die ersten Nuten, in gleicher Richtung betrachtet.

Durch diese Ausbildung der Lamellenkupplung wird erreicht, dass das Schmiermittel länger im Bereich der Reibbeläge verbleibt. Durch die längere Verweilzeit kann das Schmiermittel eine größere Wärmemenge aufnehmen, wodurch die Kühlleistung durch den verbesserten Wärmeabtransport und damit die Leistungsfähigkeit der Lamellenkupplung verbessert werden kann. Gleichzeitig werden aber durch die vorhandenen ersten Nuten und die gegebenenfalls vorhandenen zweiten Nuten Schleppverluste verringert, da der Schmiermittelabfluss bei geöffneter Kupplung weitgehend ungehindert stattfinden kann. In Anhängigkeit von der Viskosität des Schmiermittels wird nämlich durch dieses ein mehr oder weniger großes Schleppmoment verursacht, da die Reibflächen über das Schmiermittel mehr oder weniger mit der Oberfläche der jeweiligen Gegenlamellen in Kontakt stehen. Dies wiederum führt zu einem Leistungsverlust dieser Reibsysteme. Ein weiterer Vorteil der Lamellenkupplung ist, dass durch den vorhandenen Schmiermitteldruck im Bereich der Reibbeläge, verursacht durch den längeren Verbleib des Schmiermittels in diesem Bereich, die Vereinzelung der Lamellen beim Öffnen verbessert ist, wodurch ebenfalls das Schleppmoment reduziert werden kann. Es ist damit auch nicht notwendig, wellige Gegenlamellen einzusetzen, wie diese heute häufig für das bessere Trennen der Lamellen erfolgt. Die Vermeidung von gewellten Gegenlamellen führt wiederum zu einer einfacheren und kostengünstigeren Herstellbarkeit der Lamellen. Durch die beschriebene Ausbildung der Lamellenkupplung kann zudem die Leerlaufcharakteristik der Lamellenkupplung beeinflusst werden, indem der Schmiermittelfluss drehlaufabhängig über die Anordnung, Ausgestaltung und Dimensionierung der Nuten eingestellt wird. Es kann die Resultierende aus tangentialer und radialer Schmiermittelströmung über die ersten und die zweiten Nuten zueinander beeinflusst bzw. gesteuert werden. Darüber hinaus kann eine laminare Strömung des Schmiermittels im Bereich der Reibbeläge in eine turbulente Strömung überführt werden.

Nach einer Ausführungsvariante der Lamellenkupplung kann vorgesehen sein, dass die ersten und/oder die zweiten Nuten schräg verlaufend zur Radialrichtung ausgebildet sind. Es kann damit die Kühlleistung durch eine längere Verweilzeit des Schmiermittels im Bereich der Reibbeläge weiter verbessert werden.

Als besonders vorteilhaft hat sich bei dieser Ausführungsvariante herausgestellt, wenn die ersten und/oder die zweiten Nuten in einem Winkel zwischen 1 ° und 30 ° gegen die Radialrichtung geneigt verlaufend ausgebildet sind. Es konnte festgestellt werden, dass die Leerlaufverlustreduzierung in diesem Winkelbereich aufgrund der Förderwirkung durch die Schrägstellung deutlich verbessert werden kann.

Aus den genannten Gründen ist es auch vorteilhaft, wenn nach einer anderen Ausführungsvariante die ersten und/oder die zweiten Nuten einen bogenförmigen Verlauf aufweisen. Sofern sowohl die ersten als auch die zweiten Nuten bogenförmig ausgebildet sind, besteht dabei die Möglichkeit, die Biegungen der ersten und der zweiten Nuten so auszugestalten, dass im Sinne des Turbinenprinzips die ersten Nuten (Innennuten) als Laufschaufeln (Pumpschaufeln) und die zweiten Nuten (Außennuten) als Leitschaufeln fungieren. Es ist dabei aber auch die umgekehrte Funktionalität möglich.

Nach einer weiteren Ausführungsvariante kann vorgesehen sein, dass die ersten Reibbeläge aus einem zum Werkstoff der zweiten Reibbeläge unterschiedlichen Werkstoff bestehen. Es kann damit durch die Überlagerung von zwei Reibcharakteristiken Einfluss auf die Wärmeentstehung genommen werden.

Nach einer Ausführungsvariante dazu kann vorgesehen werden, dass die zweiten Reibbeläge aus einem im Vergleich zum Werkstoff der ersten Reibbeläge verschleißfesteren Werkstoff bestehen. Es wird damit ermöglicht, dass die zweiten Reibbeläge höheren Temperaturen ausgesetzt werden können, wodurch die Anzahl und/oder die Größe der zweiten Nuten reduziert werden kann, sodass in weiterer Folge das Schmiermittel länger im Bereich der Reibbeläge verbleiben kann.

Eine bessere Beölung und damit eine bessere Kühlleistung kann auch erreicht werden, wenn die zweiten Reibbeläge eine größere Schichtdicke aufweisen, als die ersten Reibbeläge. Mit dieser Ausführungsvariante wird erreicht, dass der Ölabfluss durch das Schließen der Kupplung im Bereich der zweiten, radial äußeren Reibbeläge weitgehend unterbunden wird, wohingegen das Schmiermittel im Bereich der ersten, also radial inneren Reibbeläge noch "zirkulieren" kann.

Nach einer anderen Ausführungsvariante kann vorgesehen sein, dass der erste Reibbelag durch erste Reibbelagsegmente gebildet ist, wobei in jedem der ersten Reibbelagsegmente zumindest eine dritte Nut und mehrere vierte Nuten ausgebildet sind, wobei sich die zumindest eine dritte Nut ()von einer radial inneren Stirnfläche der ersten Reibbelagsegmente in Richtung auf eine radial äußere Stirnfläche der ersten Reibbelagsegmente erstreckt und beabstandet zur radial äußeren Stirnfläche endet, und wobei die vierten Nuten eine maximale Breite in Umfangsrichtung aufweisen, die zwischen 1 % und 20 % einer maximalen Breite der dritten Nut in gleicher Richtung beträgt und wobei sich die vierten Nuten () ununterbrochen und unverzweigt von der radial inneren Stirnfläche der ersten Reibbelagsegmente bis in die radial äußeren Stirnfläche der ersten Reibbelagsegmente erstrecken. Von Vorteil ist dabei, dass die Beölung der Reibbelagsegmente über die dritte Nut eine rasche Abfuhr der entstehenden Reibwärme ermöglicht. Durch die zusätzlich angeordneten, sehr dünnen vierten Nuten kann hingegen das Schleppmoment deutlich reduziert werden, wodurch die Leistungsfähigkeit der nasslaufenden Kupplung verbessert werden kann. Darüber hinaus bewirken diese dünnen vierten Nuten, dass allfällige vorhandene Fremdpartikel im Schmieröl zumindest teilweise zurückgehalten werden, wodurch diese Nuten von reinerem Schmieröl durchströmt werden. Es kann damit die Beölung der Reibbelagsegmente verbessert werden. Allfällige Schmutzpartikel können über die zwischen den Reibbelagssegmenten aufgrund deren Beabstandung zueinander ausgebildeten ersten Nuten abgeführt werden.

Zur weiteren Reduzierung des Schleppmoments aufgrund des voranstehend genannten Effekts kann vorgesehen sein, dass der zweite Reibbelag durch zweite Reibbelagsegmente gebildet ist, wobei in jedem der zweiten Reibbelagsegmente mehrere fünfte Nuten ausgebildet sind, wobei die fünften Nuten eine maximale Breite in Umfangsrichtung aufweisen, die zwischen 1 % und 20 % einer maximalen Breite der zweiten Nut in gleicher Richtung beträgt und wobei sich die fünften Nuten ununterbrochen und unverzweigt von der radial inneren Stirnfläche der zweiten Reibbelagsegmente bis in die radial äußeren Stirnfläche der zweiten Reibbelagsegmente erstrecken.

Nach einer Ausführungsvariante der Lamellenkupplung kann vorgesehen sein, dass die vierten und/oder fünften Nuten einen dreieckförmigen Querschnitt aufweisen. Einerseits können damit die voranstehenden Effekte verbessert werden. Andererseits sich dadurch die vierten und/oder fünften Nuten einfacher herstellbar, in dem eine entsprechend geformtes, schneidenartiges Werkzeug einfacher in die Reibbelagsegmente eingedrückt werden kann. Die dünne Geometrie der vierten und/oder fünften Nuten ist damit mit höherer Präzision darstellbar.

Zur Vermeidung eines Schmiermittelstaus in der dritten Nut und/oder der zweiten Nut kann weiter vorgesehen sein, dass eine sechste Nut an dem radial äußeren Ende der dritten Nut anschließend angeordnet ist, und sich sechste Nut bis in die radial äußere Stirnfläche der ersten Reibbelagssegmente erstreckt und/oder dass eine siebte Nut an dem radial äußeren Ende der zweiten Nut anschließend angeordnet ist, und sich die siebte dritte Nut bis in die radial äußere Stirnfläche der zweiten Reibbelagsegmente erstreckt.

Vorzugsweise die sechste Nut eine maximale Breite in Umfangsrichtung auf, die zwischen 1 % und 20 % einer maximalen Breite der dritten Nut in gleicher Richtung beträgt und/oder weist die siebte Nut eine maximale Breite in Umfangsrichtung auf, die zwischen 1 % und 20 % einer maximalen Breite der zweiten Nut in gleicher Richtung beträgt, wodurch die voranstehend genannten Effekte unterstützt werden.

Um das Einströmen des Schmiermittels in die dritte Nut und/oder zweite Nut zu verbessern, kann vorgesehen sein, dass die dritte Nut mit einem sich in Richtung auf die radial innere Stirnfläche der ersten Reibbelagssegmente erweiternden Querschnitt ausgebildet ist und/oder dass die zweite Nut mit einem sich in Richtung auf die radial innere Stirnfläche der zweiten Reibbelagssegments erweiternden Querschnitt ausgebildet ist.

Zur Erhöhung des Ölvolumens im Reibbelag bzw. in den Reibbelägen kann weiter vorgesehen sein, dass die dritte Nut im Bereich des radial äußeren Endes mit einer Querschnittserweiterung ausgebildet ist und/oder dass die zweite Nut im Bereich des radial äußeren Endes mit einer Querschnittserweiterung ausgebildet ist. Gleichzeitig kann dieses zusätzliche Volumen zur Reduktion eines Schmiermittelstaus in den Reibbelägen beitragen, sodass das Schmiermittel kontrollierter aus den Reibbelägen ausströmen kann.

Gemäß einer weiteren Ausführungsvariante dazu kann die dritte Nut zumindest annähernd pilzförmig ausgebildet sein und/oder kann die zweite Nut zumindest annähernd pilzförmig ausgebildet sein, wodurch die Pufferwirkung der dritten bzw. der zweiten Nut verbessert werden kann.

Nach weiteren Ausführungsvarianten der Lamellenkupplung kann vorgesehen sein, dass auf dem Innenlamellengrundkörper zumindest zwei erste Reibbeläge in einem radialen Abstand angeordnet sind, wobei der radiale Abstand größer ist als eine radiale Breite des zweiten Reibbelags oder der zweiten Reibbeläge, sodass der zweite Reibbelag oder die zweiten Reibbeläge bei geschlossener Lamellenkupplung zwischen die ersten Reibbeläge eingreifen kann oder können, oder dass auf dem Außenlamellengrundkörper zumindest zwei zweite Reibbeläge in einem radialen Abstand angeordnet sind, wobei der radiale Abstand größer ist als eine radiale Breite des ersten Reibbelags oder der ersten Reibbeläge, sodass der erste Reibbelag oder die ersten Reibbeläge bei geschlossener Lamellenkupplung zwischen die zweiten Reibbeläge eingreifen kann oder können. Es können damit voranstehende Effekte weiter verbessert werden.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einer Lamellenkupplung in Seitenansicht;
- Fig. 2: ein Lamellenpaket in Schrägansicht;
- Fig. 3: eine Außenlamelle einer Ausführungsvariante der Lamellenkupplung;
- Fig. 4: eine Innenlamelle zur Ausführungsvariante der Lamellenkupplung nach Fig. 3;
- Fig. 5: ein Reiblamellensegment einer Ausführungsvariante der Lamellenkupplung in Draufsicht;
- Fig. 6: das Reiblamellensegment nach Fig. 5 in Stirnseitenansicht geschnitten gemäß der Linie VI-VI in Fig. 5;
- Fig. 7: eine andere Ausführungsvariante eines Reiblamellensegments in Draufsicht;
- Fig. 8: eine weitere Ausführungsvariante eines Reiblamellensegments in Draufsicht;
- Fig. 9: eine Außenlamelle einer Ausführungsvariante der Lamellenkupplung;
- Fig. 10: eine Innenlamelle zur Ausführungsvariante der Lamellenkupplung nach Fig. 9.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

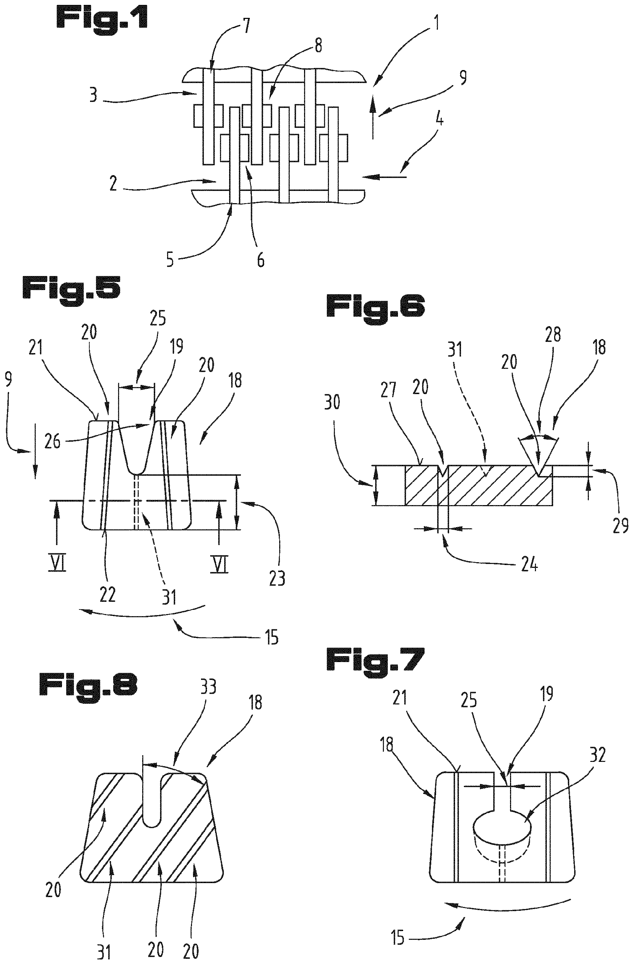

In Fig. 1 ist ein Ausschnitt aus einer nasslaufenden Lamellenkupplung 1 dargestellt. Die Lamellenkupplung 1 weist mehrere Innenlamellen 2 und mehrere Außenlamellen 3 auf. Die Innenlamellen 2 sind auf einem Innenlamellenträger in einer Axialrichtung 4 abwechselnd mit den Außenlamellen 3, die auf einem Außenlamellenträger angeordnet sind, angeordnet. Über einen entsprechenden Betätigungsmechanismus sind die Innenlamellen 2 relativ zu den Au-ßenlamellen 3 in der Axialrichtung 4 verstellbar, sodass zwischen den Innenlamellen 2 und den Außenlamellen 3 ein Reibschluss ausgebildet wird.

Jede Innenlamelle 2 weist einen Innenlamellengrundkörper 5 auf, auf dem beidseitig (in der Axialrichtung 4 betrachtet) jeweils zumindest ein erster Reibbelag 6 angeordnet ist. Ebenso weist jede Außenlamelle 3 einen Außenlamellengrundkörper 7 auf, auf dem beidseitig (wiederum in der Axialrichtung 4 betrachtet) jeweils zumindest ein zweiter Reibbelag 8 angeordnet ist. Die ersten Reibbeläge 6 sind in einer Radialrichtung 9 zur Gänze unterhalb der zweiten Reibbeläge 8 situiert, wie dies aus Fig. 1 ersichtlich ist. Dadurch gelangen die ersten Reibbeläge 6 bei geschlossener Lamellenkupplung 1 mit den Außenlamellengrundkörpern 7 der jeweilig unmittelbar benachbarten Außenlamellen 3 und die zweiten Reibbeläge 8 bei geschlossener Lammellenkupplung 1 mit den Innenlamellengrundkörpern 5 der jeweilig unmittelbar benachbarten Innenlamellen 2 in Reibkontakt.

Der Innenlamellengrundkörper 5 und der Außenlamellengrundkörper 7 bestehen insbesondere aus einem metallischen Werkstoff, beispielsweise aus Stahl.

Dieser prinzipielle Aufbau einer derartigen nasslaufenden Lamellenkupplung 1 ist aus dem Stand der Technik bekannt. Zu weiteren Einzelheiten dazu sei daher auf diesen einschlägigen Stand der Technik verwiesen.

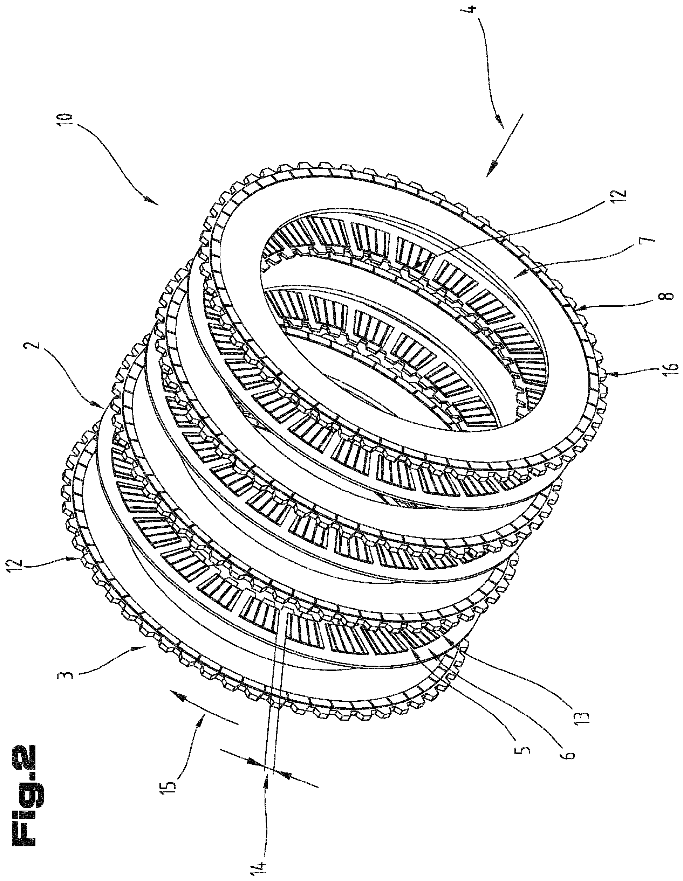

In Fig. 2 ist eine Ausführungsvariante eines Lamellenpakets 10 aus vier Außenlamellen 3 und drei Innenlamellen 2 dargestellt, wie es in der Lamellenkupplung 1 nach Fig. 1 zum Einsatz kommt. Es sei dazu angemerkt, dass die dargestellte Anzahl an Innenlamellen 2 und Außenlamellen 3 nur beispielhaften Charakter hat. Die genaue Anzahl dieser Lamellen richten sich nach dem jeweiligen Einsatzzweck der und den mechanischen Anforderungen an die Lamellenkupplung 1. Beispielsweise kann das Lamellenpaket 10 zwischen zwei und zwanzig Außenlamellen 3 und zwischen einer und 19 Innenlamellen 2 aufweisen.

Die Innenlamellen 2 weisen eine Innenlamellenverzahnung 11 und die Außenlamellen 3 eine Außenlamellenverzahnung 12 auf, über die sie mit dem Innenlamellenträger bzw. dem Außenlamellenträger drehfest verbunden sind. Selbstverständlich können die Innen- und Außenlamellen 2, 3 auch auf andere Art und Weise mit dem jeweiligen Träger drehfest verbunden werden.

Im Folgenden wird nur mehr auf eine Innenlamelle 2 bzw. eine Außenlamelle 3 näher eingegangen. Die entsprechenden Ausführungen sind aber auch sämtliche Innenlamellen 2 bzw. Außenlamellen 3 der Lamellenkupplung 1 übertragbar, da bevorzugt alle Innenlamellen 2 und alle Außenlamellen 3 der Lamellenkupplung 1 jeweils gleich ausgebildet sind.

Der auf dem Innenlamellengrundkörper 5 angeordnete und mit diesem verbundene, insbesondere verklebte, erste Reibbelag 6 ist ringförmig ausgebildet und weist zumindest eine erste Nut 13, insbesondere mehrere ersten Nuten 13, auf. Diese ersten Nuten 13 dienen der Schmiermittelführung, wobei als Schmiermittel insbesondere ein Schmieröl verwendet wird. Die ersten Nuten 13 können also auch als Ölnuten bezeichnet werden.

Wenn im Folgenden Nuten beschrieben werden, handelt es sich dabei immer um Schmiermittelnuten (Ölnuten), sofern nichts anderes angegeben ist.

Die zumindest eine erste Nut 13 weist eine Nuttiefe (in Richtung der Axialrichtung 4) von bis zu 100 % einer Reibbelagdicke (in Richtung der Axialrichtung 4) auf. Im in Fig. 2 konkret dargestellten Ausführungsbeispiel beträgt die Nuttiefe 100 % der Reibbelagdicke, sodass also der ringförmige erste Reibbelag 6 segmentiert ist. Es sind aber auch geringere Nuttiefen ausbildbar, beispielsweise im Bereich von 10 % bis 99 % der Reibbelagdicke.

Eine Breite 14 der zumindest einen ersten Nut 13 in einer Umfangsrichtung 15 der Innenlamelle 2 ist vorzugsweise so bemessen, dass ein Querschnittsfläche der zumindest einen ersten Nut 13, in der Radialrichtung 9 (Fig. 1) betrachtet zwischen 0,1 mm² und 32 mm², insbesondere zwischen 0,3 mm ² und 18 mm², beträgt.

Obwohl nur ein erster Reibbelag 6 dargestellt ist, besteht auch die Möglichkeit, dass auf der Innenlamelle 2 mehrere, beispielsweise zwei oder drei, erste Reibbeläge 6 in der Radialrichtung 9 übereinander angeordnet sind. Die mehreren ersten Reibbeläge 6 können gleich ausgebildet sein, insbesondere in Hinblick auf die Nutierung. Sie können aber auch eine unterschiedliche Nutierung aufweisen. Beispielsweise können die ersten Nuten 13 in der Umfangsrichtung 15 versetzt ausgebildet sein.

Der auf dem Außenlamellengrundkörper 7 angeordnete und mit diesem verbundene, insbesondere verklebte, zweite Reibbelag 8 ist ebenfalls ringförmig ausgebildet. Der zweite Reibbelag 8 weist in einer ersten erfindungsgemäßen Variante keine Nuten auf und ist als geschlossener Ring mit über den gesamten Umfang gleichbleibender Belagdicke ausgeführt. In einer zweiten erfindungsgemäßen Variante weist aber der zweite Reibbelag 8 zumindest eine, insbesondere mehrere, zweite Nuten 16 auf, wie dies in Fig. 2 dargestellt ist, die eine Querschnittsfläche in der Radialrichtung 9 (Fig. 1) aufweist, die kleiner ist als die Querschnittsfläche der zumindest einen ersten Nut 13 in gleicher Richtung betrachtet. Insbesondere kann die Querschnittsfläche der zumindest einen zweiten Nut 16 zwischen 1 % und 99 %, vorzugsweise zwischen 5 % und 80 %, der Querschnittsfläche der zumindest einen ersten Nut 13 betragen. Es kann dazu die Nuttiefe (in Richtung der Axialrichtung 4) und die Nutbreite (in Richtung der Umfangsrichtung 15) der zumindest einen zweiten Nut 16 entsprechend variiert werden.

Weiter besteht die Möglichkeit, dass die zumindest eine zweite Nut 16 eine Querschnittsfläche in der Radialrichtung 9 (Fig. 1) aufweist, die größer ist als die Querschnittsfläche der zumindest einen ersten Nut 13 in gleicher Richtung betrachtet. Insbesondere kann in diesem Fall die Querschnittsfläche der zumindest einen zweiten Nut 16 zwischen 101 % und 1000 %, vorzugsweise zwischen 101 % und 200 %, der Querschnittsfläche der zumindest einen ersten Nut 13 betragen.

In der bevorzugten Ausführungsvariante sind die mehreren ersten Nuten 13 des ersten Reibbelags 6 und die mehreren zweiten Nuten 16 des zweiten Reibbelags 8 gleichverteilt in der Umfangsrichtung 15, also mit jeweils gleichem Abstand zueinander, angeordnet bzw. ausgebildet.

Zusätzlich zu dieser Ausführungsvariante mit der zumindest einen kleineren zweiten Nut 16 besteht auch die Möglichkeit, dass diese zumindest eine zweite Nut 16 im zweiten Reibbelag 8 in der Umfangsrichtung 15 versetzt zu der zumindest einen ersten Nut 13 im ersten Reibbelag 6 angeordnet ist, sodass also die zweite Nut 16 oder die zweiten Nuten 16 in der Radialrichtung 9 nicht fluchtend mit der ersten Nut 13 oder den ersten Nuten 13 ausgebildet ist bzw. sind. Es wird also kein direkter (geradliniger) Abfluss des Schmiermittels von den ersten Nuten 13 über die zweiten Nuten 16 ermöglicht. Bei dieser Ausführungsvariante der Lamellenkupplung 1 besteht auch, dass die Querschnittsfläche der zumindest einen zweiten Nut 16 in der Radialrichtung 9 gleich groß ist, wie die Querschnittsfläche der zumindest einen ersten Nut 13 in der gleichen Richtung betrachtet.

Wie aus Fig. 2 ersichtlich ist, kann der erste Reibbelag 6 noch weitere Nuten aufweisen. Es besteht zudem die Möglichkeit, dass auch der zweite Reibbelag 8 weitere Nuten aufweisen. Es sei dazu auf die nachstehenden Ausführungen verwiesen.

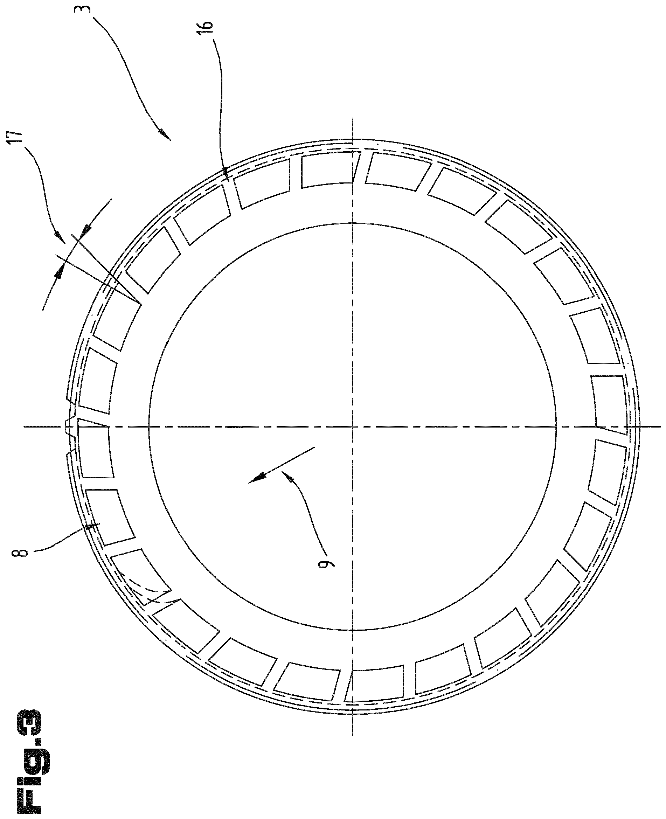

In den Fig. 3 bis 10 sind weitere und gegebenenfalls für sich eigenständige Ausführungsvarianten der Außenlamellen 3 und der Innenlamellen 2 bzw. Details davon gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung zu den vorangegangenen Fig. 1 und 2 hingewiesen bzw. darauf Bezug genommen.

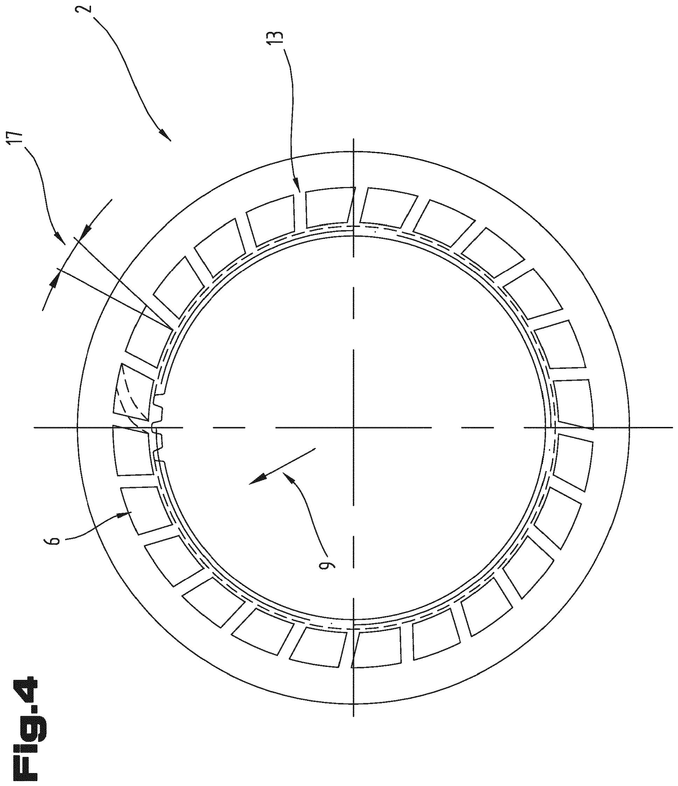

Die Fig. 3 und 4 zeigen eine Außenlamelle 3 mit dem zweiten Reibbelag 8 bzw. eine Innenlamelle 2 mit dem ersten Reibbelag 6. Bei dieser Ausführungsvariante sind die zweiten Nuten 16 im zweiten Reibbelag 8 und die ersten Nuten 13 im ersten Reibbelag 6 schräg verlaufend zur Radialrichtung 9 angeordnet bzw. ausgebildet. In der bevorzugten Ausführungsvariante sind die zweiten Nuten 16 und die ersten Nuten 13, d.h. die sie begrenzenden Nutseitenwände, in einem Winkel 17 zwischen 1 ° und 30 °, insbesondere in einem Winkel 17 zwischen 5 ° und 20 °, gegen die Radialrichtung geneigt verlaufend ausgebildet.

Die ersten Nuten 13 sind vorzugsweise im gleichen Winkel 17 (sowohl hinsichtlich der Neigungsrichtung als auch hinsichtlich der Größe des Winkels 17) geneigt ausgebildet. Es besteht aber auch die Möglichkeit, dass die ersten Nuten 13 in einem zum Winkel 17 der zweiten Nuten 16 unterschiedlichen Winkel 17 geneigt sind. In dieser Ausführungsvariante weisen bevorzugt die zweiten Nuten 16 den größeren Neigungswinkel auf.

Es ist weiter bevorzugt, wenn die beiden in der Axialrichtung 4 (Fig. 1) einander gegenüberliegenden ersten Reibbeläge 6 auf der Innenlamelle 2 und die beiden in der Axialrichtung 4 einander gegenüberliegenden zweiten Reibbeläge 8 auf der Außenlamelle 2, also auf die Reibbeläge 6, 8 auf der Vorderseite und der Rückseite der Lamellen, jeweils spiegelbildlich zueinander ausgebildet sind.

Es besteht die Möglichkeit, dass nur die ersten Nuten 13 oder nur die zweiten Nuten 16 gegen die Radialrichtung 9 geneigt verlaufend ausgebildet sind.

Nach einer weiteren Ausführungsvariante kann vorgesehen sein, dass die ersten und/oder die zweiten Nuten 13, 16 einen bogenförmigen Verlauf aufweisen, wie dies in den Fig. 3 und 4 jeweils strichliert angedeutet ist. Der Verlauf für die ersten Nuten 13 und die zweiten Nuten 16 kann dabei in gleicher Richtung (wie in den Fig. 3 und 4 dargestellt) oder in entgegengesetzter Richtung ausgebildet sein.

Bei sämtlichen Ausführungsvarianten der Lamellenkupplung 1 besteht die Möglichkeit, dass die ersten Reibbeläge 6 aus einem zum Werkstoff der zweiten Reibbeläge 8 unterschiedlichen Werkstoff bestehen. Insbesondere bestehen dabei die zweiten Reibbeläge 8 aus einem im Vergleich zum Werkstoff der ersten Reibbeläge 6 verschleißfesteren Werkstoff. So können z.B. die zweiten Reibbeläge 8 aus einem Carbonwerkstoff und die ersten Reibbeläge 6 aus einem kostengünstigeren, harzgebundenen Papierbelag bestehen. Die Werkstoffe an sich, die für Reibbeläge verwendet werden, sind bekannt, sodass sich weitere Erörterungen dazu erübrigen.

Es ist weiter möglich, dass gemäß einer anderen Ausführungsvariante die zweiten Reibbeläge 8 eine größere Schichtdicke und/oder eine größere Dichte aufweisen, als die ersten Reibbeläge 6, wobei auch dazu umgekehrte Ausbildung möglich ist. Es kann damit das Ansprechverhalten und der Leistungsaufbau der Lamellenkupplung verbessert werden.

In Fig. 5 ist eine erste Ausführungsvariante eines Reibbelagssegmentes 18 in Draufsicht und in Fig. 6 in Stirnansicht geschnitten dargestellt.

Wie bereits voranstehend ausgeführt, besteht die Möglichkeit, dass die ersten und/oder die zweiten Nuten 13, 16 so tief ausgebildet sind, dass deren Nuttiefe 100 % der Belagdicke entspricht. Der erste und/oder der zweite Reibbelag 6, 8 wird/werden dadurch in die Reibbelagsegmente 18 unterteilt.

Es besteht bei dieser Ausführungsvariante die Möglichkeit, dass nur der erste Reibbelag 6 oder nur der zweite Reibbelag 8 oder sowohl der erste Reibbelag 6 als auch der zweite Reibbelag 8 in die Reibbelagsegmente 18 unterteilt ist. Wenn sowohl der erste Reibbelag 6 als auch der zweite Reibbelag 8 in die Reibbelagsegmente 18 unterteilt ist, sind die Reibbelagsegmente des ersten Reibbelags 6 unterschiedlich zu den Reibbelagsegmenten 18 des zweiten Reibbelags 8. Vorzugsweise sind die Reibbelagsegmente 18 des zweiten Reibbelags 8 breiter (in der Umfangsrichtung 15 (Fig. 2 betrachtet) und/oder weisen eine geringere Anzahl an Nuten auf, als die Reibbelagsegmente 18 des ersten Reibbelags 6. Es besteht aber auch die Möglichkeit, dass alle Reibbelagsegmente 18 gleich ausgebildet sind, insbesondere wenn die Reibbelagsegmente 18 des ersten Reibbelags 6 nicht fluchtend zu den Reibbelagsegmenten 18 des zweiten Reibbelags 8 angeordnet sind.

In der bevorzugten Ausführungsvariante ist jedoch nur der erste Reibbelag 6 mit den Reibbelagsegmenten 18 ausgebildet.

Die Reibbelagssegmente 18 sind in der Umfangsrichtung 15 (Fig. 2) nebeneinanderliegend angeordnet. Zwischen den einzelnen Reibbelagssegmenten 18 sind die ersten Nuten 13 (oder die zweiten Nuten 16) ausgebildet.

Die Verbindung der Reibbelagssegmente 18 mit dem 5 Innenlamellengrundkörper 5 (bzw. dem Außenlamellengrundkörper 7) erfolgt durch eine Verklebung, insbesondere mit einem Harz.

Vorzugsweise sind alle Reibbelagsegmente 18 der Innenlamelle 2 (bzw. der Außenlamelle 3) gleich ausgebildet. Aus diesem Grund wird im Folgenden nur ein Reibbelagssegment 18 beschrieben. Diese Ausführungen sind aber auf sämtliche Reibbelagssegmente 18 der Innenlamelle 2 (bzw. der Außenlamelle 3) zu übertragen.

Wie aus den Fig. 5 und 6 ersichtlich, sind in jedem der Reibbelagsegmente 18 eine dritte Nut 19 und mehrere vierte Nuten 20 ausgebildet. Die dritte Nut 19 unterscheidet sich deutlich von den mehreren vierten Nuten 20. So erstreckt sich die dritte Nut 19 beginnend in einer radial inneren Stirnfläche 21 in Richtung auf eine radial äußere Stirnfläche 22 des Reibbelagssegments 18, endet jedoch in einem Abstand 23 vor dieser radial äußeren Stirnfläche 22. Mit anderen Worten erstreckt sich die dritte Nut 19 nicht über die gesamte Breite des Reibbelagssegments 18 in der Radialrichtung 9.

Der Abstand 23 kann ausgewählt sein aus einem Bereich von 20 % bis 60 %, ins-besondere aus einem Bereich von 30 % bis 40 %, der Breite des Reibbelagsegments 18 in der Radialrichtung 9.

Auch die vierten Nuten 20 erstrecken sich beginnend in der radial inneren Stirnfläche 21 in Richtung auf die radial äußere Stirnfläche 22 des Reibbelagssegments 18. Zum Unterschied zur dritten Nut 19 erstrecken sich die vierten Nuten 22 aber in radialer Richtung durchgehend über die Breite des Reibbelagssegments 18 in der Radialrichtung 9, enden also erst in der der radial äußeren Stirnfläche 22.

Darüber hinaus unterscheiden sich die vierten Nuten 20 auch deutlich hinsichtlich einer maximalen Breite 24 in der Umfangsrichtung 15 von der dritten Nut 19. Die vierten Nuten 20 weisen eine maximale Breite 24 in der Umfangsrichtung 15 des auf, die zwischen 1 % und 20 %, insbesondere zwischen 1 % und 10 %, vorzugsweise zwischen 1 % und 5 %, einer maximalen Breite 25 der dritten Nut 19 in gleicher Richtung beträgt. Die vierten Nuten 20 sind also deutlich schmäler als die dritte Nut 19 ausgeführt.

Mit maximaler Breite 24 bzw. 25 ist dabei jene Breite gemeint, die in der jeweiligen Nut 19 bzw. 20 am größten ist. Es besteht nämlich auch die Möglichkeit, dass sich die Breiten 24, 25 aufgrund von verschiedenen Querschnittsformen der Nuten 19, 20 über ihren Verlauf ändert.

Die vierten Nuten 20 weisen in der Radialrichtung 9 der Innenlamelle 2 bevorzugt einen ununterbrochenen und unverzweigten Verlauf von der radial inneren Stirnfläche 21 des Reibbelagssegments 18 bis in die radial äußeren Stirnfläche 22 des Reibbelagssegments 18 auf. Es zweigen also keine weiteren Nuten von den vierten Nuten 20 ab.

Es sei an dieser Stelle darauf hingewiesen, dass die Reibbelagsegmente 18 auch nur die dritte Nut 19 oder nur die vierten Nuten 20 aufweisen können.

Der Übergang von der radial inneren Stirnfläche 21 in die dritten Nut 19 kann scharfkantig ausgeführt sein. Vorzugsweise ist dieser Übergang allerdings mit einer Rundung 26 versehen, um das Einströmverhalten des Schmiermittels in die dritte Nut 19 zu verbessern.

Ebenso können die Übergänge von der radial inneren Stirnfläche 21 in die vierten Nuten 20 und/oder von den Nuten 19, 20 in die radial äußeren Stirnfläche 22 scharfkantig oder gerundet ausgeführt sein.

Wie besser aus Fig. 6 zu ersehen ist, weisen die vierten Nuten 20 vorzugsweise einen in Richtung auf die Stirnfläche 21 bzw. 22 betrachtet dreieckförmigen Querschnitt auf. Die maximale Breite 24 dieser vierten Nuten 20 bezieht sich bei dieser Ausführungsvariante der Querschnittsform auf die Breite 24 an einer äußeren Oberfläche 27 der Reibbelagssegmente 18. Die äußere Oberfläche 27 ist jene Oberfläche 27, die in Reibschluss mit der jeweiligen Gegenlamelle der Lamellenkupplung 1 (Fig. 1) schaltbar ist.

Ein Winkel 28, den die Nutseitenflächen der vierten Nuten 20 mit dem dreieck-förmigen Querschnitt miteinander einschließen, kann ausgewählt sein aus einem Bereich von 50 ° bis 110 °, insbesondere aus einem Bereich von 70 ° bis 90 °. Beispielsweise kann dieser Winkel 28 80 ° betragen.

Es sind aber auch andere Querschnittsformen für die vierten Nuten 20 möglich, beispielsweise eine quadratische, eine rechteckförmige, eine trapezförmige (ins-besondere mit der größten Abmessung an der Oberfläche 27 des Reibbelagselements 18, eine halbrunde, etc.. Die dreieckförmige Querschnittsform wird jedoch bevorzugt.

Die vierten Nuten 20 weisen in der bevorzugten Ausführungsvariante eine Tiefe 29 in der Axialrichtung 4 (Fig. 1) der Innenlamelle 2 auf, die ausgewählt ist aus einem Bereich von 5 % bis 55 %, insbesondere 10 % bis 50 %, vorzugsweise 20 % bis 40 %, einer Gesamtdicke 30 des Reibbelagssegments 18 in gleicher Richtung.

In der bevorzugten Ausführungsvariante der Reiblamelle 5 erstreckt sich die dritte Nut 19 in der Axialrichtung 4 der Innenlamelle 2 (Fig. 1) durchgehend durch das Reibbelagssegment 18. Den Nutengrund der dritten Nut 19 bildet in diesem Fall die Oberfläche des Innenlamellengrundkörpers 5 der Innenlamelle 2. Die dritte Nut 19 weist also in dieser Ausführungsvariante eine Tiefe auf, die der Gesamtdicke 30 des Reibbelagssegments 18 entspricht. Das Reibbelagssegment 18 kann in diesem Fall einen in Draufsicht betrachtet annähernd U-förmigen Querschnitt aufweisen.

Es ist aber auch möglich, dass die dritte Nut 15 eine im Vergleich dazu geringere Tiefe aufweist. In diesem Fall kann die Tiefe der dritten Nut 19 ausgewählt sein aus einem Bereich von 40 % bis 95 %, insbesondere von 50 % bis 95 %, vorzugsweise von 60 % bis 95 %, der Gesamtdicke 30 des Reibbelagssegments 18.

Es ist gemäß einer anderen Ausführungsvariante des Reibbelagssegments 18 möglich, dass die dritte Nut 19 mit einem sich in Richtung auf die radial innere Stirnfläche 21 des Reibbelagssegments 18 erweiternden Querschnitt ausgebildet ist, wie dies in Fig. 5 dargestellt ist. Die dritte Nut 19 weist in diesem Fall dann die maximale Breite 25 an der radial inneren Stirnfläche 21 auf.

Wie in Fig. 5 dargestellt, kann die dritte Nut 19 bei dieser Ausführungsvariante einen in Draufsicht annähernd trapezförmigen Querschnitt aufweisen, wobei jedoch das der radialen äußeren Stirnfläche 22 näher liegende Ende der dritten Nut 19 vorzugsweise abgerundet ist.

Es sind aber auch andere Querschnittsformen der dritten Nut 19, wiederum in Draufsicht betrachtet, möglich, beispielsweise ein rechteckförmiger, etc.

Sofern sich die dritte Nut 19 nicht über die Gesamtdicke 30 des Reibbelagselements 18 erstreckt, kann die dritte Nut 19 auch in dieser Richtung, d.h. in Richtung der Tiefe der dritten Nut 19, einen sich verändernden Querschnitt aufweisen, wobei wiederum die maximale Breite 25 der dritten Nut 19 an der äußeren Oberfläche 27 des Reibbelagssegments 18 ausgebildet ist.

Wie bereits erwähnt, kann auch der zweite Reibbelag 8 segmentiert ausgebildet sein. In diesem Fall ist es bevorzugt, wenn der zweite Reibbelag 8 durch zweite Reibbelagsegmente gebildet ist, wobei in jedem der zweiten Reibbelagsegmente mehrere fünfte Nuten ausgebildet sind, wobei die fünften Nuten eine maximale Breite in Umfangsrichtung aufweisen, die zwischen 1 % und 20 % einer maximalen Breite der zweiten Nut 16 in gleicher Richtung beträgt und wobei sich die fünften Nuten ununterbrochen und unverzweigt von der radial inneren Stirnfläche der zweiten Reibbelagsegmente bis in die radial äußeren Stirnfläche der zweiten Reibbelagsegmente erstrecken.

Bei dieser Ausführungsvariante können die fünften Nuten gleich ausgebildet sein zu den vierten Nuten 20 der Reibbelagsegmente 18. Die entsprechenden Ausführungen dazu können daher übertragen werden.

Gemäß einer weiteren Ausführungsvariante kann vorgesehen sein, wie dies in Fig. 5 strichliert angedeutet ist, dass eine sechste Nut 31 an dem radial äußeren Ende der dritten Nut 19 anschließend angeordnet ist, und sich diese sechste Nut 31 bis in die radial äußere Stirnfläche 22 des Reibbelagssegments 18 erstreckt. Für diese sechste Nut 31 gelten bevorzugt die voranstehenden Ausführungen zu den vierten Nuten 20, insbesondere betreffend die maximale Breite 24 und/oder die Tiefe 29 und/oder die Querschnittsform.

Sofern die zweite Nut 16 im zweiten Reibbelag 8 wie die dritte Nut 19 im ersten Reibbelag 6 ausgebildet ist, besteht die Möglichkeit, dass eine siebte Nut an dem radial äußeren Ende der zweiten Nut anschließend angeordnet ist, und sich die siebte dritte Nut bis in die radial äußere Stirnfläche der zweiten Reibbelagsegmente erstreckt. Die siebte Nut kann ident zur sechsten Nut 31 ausgebildet sein.

Nach einer Ausführungsvariante kann zur Vermeidung einer Stauwirkung vorgesehen sein, dass ein Übergang von der dritten Nut 19 in die sechste Nut 31 in radialer Richtung zumindest teilweise abgeschrägt ist.

Bei der Ausführungsvariante des Reibbelagssegments 18 nach Fig. 7 weist die dritte Nut 19 im Bereich des radial äußeren Endes eine Querschnittserweiterung 32 auf.

Es sei darauf hingewiesen, dass diese Querschnittserweiterung 32 nicht zur Bestimmung der maximalen Breite 25 der dritten Nut 19 herangezogen wird. Für die Bestimmung der maximalen Breite 25 der dritten Nut 19 wird nur jener Bereich der dritten Nut 19 herangezogen, der vor dieser Querschnittserweiterung 32 liegt.

Mit dieser Ausführungsvariante des Reibbelagssegments 18 soll weiter verdeutlicht werden, dass die dritten Nut 19 auch - mit Ausnahme der Querschnittserweiterung 32 - eine konstante Breite 25 in Umfangsrichtung 15 der Innenlamelle 5 aufweisen kann, also nicht zwingend in Richtung auf die radial innere Stirnfläche 21 breiter werden muss, wenngleich dies bevorzugt ist.

Die Querschnittserweiterung 32 kann so ausgeführt sein, dass die dritten Nut 19 in Draufsicht einen zumindest annähernd pilzförmigen Querschnitt aufweist.

Die Querschnittserweiterung 32 kann aber auch andere Querschnittsformen auf-weisen (ebenfalls in Draufsicht auf das Reibbelagssegment 18 betrachtet), beispielsweise zumindest annähernd kreisförmig ausgebildet sein, wie dies in Fig. 6 strichliert angedeutet ist.

Die vierten und/oder sechsten Nut 22, 31 sind bevorzugt derart angeordnet, dass sie sich in der Radialrichtung 9 der Innenlamelle 5 erstrecken, wie dies aus den Fig. 5 und 6 ersichtlich ist.

Es ist aber auch möglich, wie dies bei der Ausführungsvariante des Reibbelags-segments 18 nach Fig. 8 gezeigt ist, dass sich die vierten und/oder sechsten Nut 22, 31 in einem spitzen Winkel 33 zur Radialrichtung 9 erstrecken/ erstreckt.

Generell sei angemerkt, dass in den Darstellungen der Reibbelagssegmente 18 nach den Fig. 5 bis 7 jeweils eine vierte Nut 20 links und rechts der dritten Nut 19 angeordnet ist. Ebenso wurde nur jeweils eine sechste Nut 31 dargestellt. Obwohl dies die bevorzugte Ausführungsvariante des Reibbelagssegments 18 und damit ist, besteht auch die Möglichkeit, dass mehr als zwei vierte Nuten 20 und/oder mehr als eine sechste Nut 31 im Reibbelagssegment 18 vorgesehen werden können.

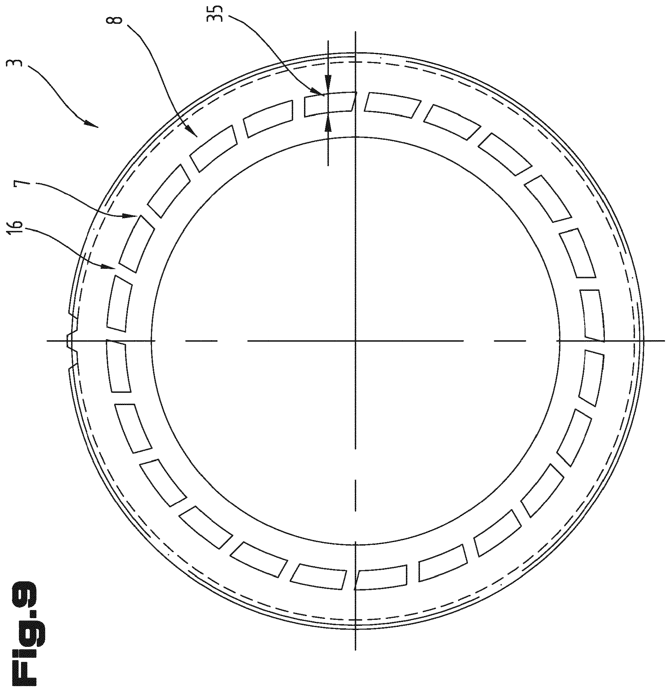

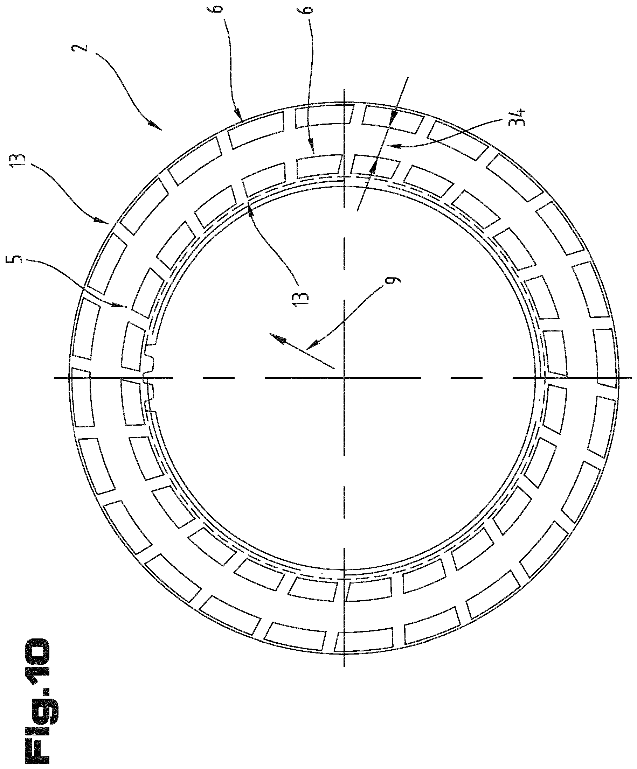

Die Fig. 9 und 10 zeigen eine Außenlamelle 3 mit dem zweiten Reibbelag 8 bzw. eine Innenlamelle 2 mit dem ersten Reibbelag 6, wobei bei dieser Ausführungsvariante auf der Innenlamelle 2 in der Radialrichtung 9 zwei erste Reibbeläge 6 übereinander angeordnet sind. Die beiden ersten Reibbeläge 6 sind beabstandet zueinander angeordnet. Ein Abstand 34 zwischen den ersten Reibbelägen 6 ist dabei größer als eine radiale Breite 35 des zweiten Reibbelages 8 auf der Außenlamelle 3. Weiter sind die ersten Reibbeläge 6 auf der Innenlamelle 2 örtlich derart platziert, dass beim Schließen der Lamellenkupplung 1 (Fig. 1) der zweite Reibbelage 8 der Außenlamelle 3 zwischen die beiden ersten Reibbeläge 6 eingreift, d.h. dass die ersten und zweiten Reibbeläge 6, 8 ineinandergreifen. Es kann damit erreicht werden, dass die ersten Reibbeläge 6 mit dem Außenlamellengrundkörper 7 und der zweite Reibbelag mit dem Innenlamellengrundkörper 5 in Kontakt tritt.

Prinzipiell können auch mehr als zwei erste Reibbeläge 6 in der Radialrichtung 9 übereinander auf der Innenlamelle 2 angeordnet sein, beispielsweise drei oder vier. In diesem Fall ist es von Vorteil, wenn auch auf der Außenlamelle 3 mehr als ein zweiter Reibbelag 8 in der Radialrichtung 9 übereinander angeordnet ist. Die Beabstandung der ersten Reibbeläge 6 und die Beabstandung der zweiten Reibbeläge 8 sowie deren örtliche Platzierung ist dabei im voranstehenden Sinn ausgeführt, sodass also auch bei diesen Ausführungsvarianten beim Schließen der Lamellenkupplung 1 die zweiten Reibbeläge 8 zwischen die ersten Reibbeläge 6 eingreifen, d.h. dass die ersten und zweiten Reibbeläge 6, 8 ineinandergreifen.

Bei diesen Ausführungsvarianten weist also die Innenlamelle 2 zumindest einen Reibbelag mehr auf als die Außenlamelle 3. Prinzipiell ist aber auch die umgekehrte Ausführungsvariante der Anordnung der ersten und zweiten Reibbeläge 6, 8 möglich, sodass also die Außenlamelle 3 um zumindest einen Reibbelag mehr aufweist, als die Innenlamelle 2.

In Hinblick auf die Anordnung bzw. die Ausbildung von Nuten bei diesen Ausführungsvarianten der Lamellenkupplung 1 sei auf die voranstehend Ausführungen dazu verwiesen, die entsprechend auch bei diesen Ausführungsvarianten gelten. Es besteht dabei aber die Möglichkeit, dass Nuten 13 in den ersten Reibbelägen 6 zueinander unterschiedlich sind, dass also beispielsweise die Nuten 13 das radial inneren ersten Reibbelages eine andere Geometrie aufweisen, als der radial äußere erste Reibbelag 6 der Innenlamelle 2. Gleiches gilt für die Au-ßenlamelle 3, falls auf dieser mehr als ein zweiter Reibbelag 8 angeordnet ist.

Die Ausführungsbeispiele zeigen mögliche Ausführungsvarianten der Lamellenkupplung 1 bzw. Details davon, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus der Lamellenkupplung 1 bzw. Details davon diese teilweise unmaßstäblich und/oder vergrößert und/oder verkleinert dargestellt wurden.

### Bezugszeichenaufstellung

| | | | |
|---|---|---|---|
| 1 | Lamellenkupplung | 31 | Nut |
| 2 | Innenlamellen | 32 | Querschnittserweiterung |
| 3 | Außenlamellen | 33 | Winkel |
| 4 | Axialrichtung | 34 | Abstand |
| 5 | Innenlamellengrundkörper | 35 | Breite |
| 6 | Reibbelag | | |
| 7 | Außenlamellengrundkörper | | |
| 8 | Reibbelag | | |
| 9 | Radialrichtung | | |
| 10 | Lamellenpaket | | |
| 11 | Innenlamellenverzahnung | | |
| 12 | Außenlamellenverzahnung | | |
| 13 | Nut | | |
| 14 | Breite | | |
| 15 | Umfangsrichtung | | |
| 16 | Nut | | |
| 17 | Winkel | | |
| 18 | Reibbelagsegment | | |
| 19 | Nut | | |
| 20 | Nut | | |
| 21 | Stirnfläche | | |
| 22 | Stirnfläche | | |
| 23 | Abstand | | |
| 24 | Breite | | |
| 25 | Breite | | |
| 26 | Rundung | | |
| 27 | Oberfläche | | |
| 28 | Winkel | | |
| 29 | Tiefe | | |
| 30 | Gesamtdicke | | |

## Patentansprüche

1. Nasslaufende Lamellenkupplung (1) umfassend mehrere Innenlamellen (2) und mehrere Außenlamellen (3), die in axialer Richtung abwechselnd angeordnet sind, wobei jede Innenlamelle (2) einen Innenlamellengrundkörper (5) aufweist, auf dem beidseitig jeweils ein erster Reibbelag (6) angeordnet ist, und jede Außenlamelle (3) einen Außenlamellengrundkörper (7) aufweist, auf dem beidseitig jeweils ein zweiter Reibbelag (8) angeordnet ist, und wobei die ersten Reibbeläge (6) in radialer Richtung zur Gänze unterhalb der zweiten Reibbeläge (8) situiert sind, sodass die ersten Reibbeläge (6) bei geschlossener Lamellenkupplung (1) mit den Außenlamellengrundkörpern (7) und die zweiten Reibbeläge (8) bei geschlossener Lammellenkupplung (1) mit den Innenlamellengrundkörpern (5) in Reibkontakt gelangen, wobei die ersten Reibbeläge (6) jeweils erste Nuten (13) mit einer Nuttiefe von bis zu 100 % einer Reibbelagdicke der ersten Reibbeläge (6) und die zweiten Reibbeläge (8) gegebenenfalls zweite Nuten (16) aufweisen, **dadurch gekennzeichnet, dass** die zweiten Reibbeläge (8) ringförmig als geschlossene Ringe mit über den gesamten Umfang gleichbleibender Belagdicke ausgebildet sind oder dass für den Fall, dass die zweiten Reibbeläge (8) die zweiten Nuten (16) aufweisen, diese zweiten Nuten (16) eine kleinere Querschnittsfläche aufweisen, im Längsverlauf der zweiten Nuten (16) betrachtet, als die ersten Nuten (13), in gleicher Richtung betrachtet.

2. Lamellenkupplung (1) nach Anspruch 1, **dadurch gekennzeichnet, dass** die ersten und/oder die zweiten Nuten (13, 16) schräg verlaufend zur Radialrichtung (9) ausgebildet sind.

3. Lamellenkupplung (1) nach Anspruch 2, **dadurch gekennzeichnet, dass** die ersten und/oder die zweiten Nuten (13, 16) in einem Winkel (17) zwischen 1 ° und 30 ° gegen die Radialrichtung (9) geneigt verlaufend ausgebildet sind.

4. Lamellenkupplung (1) nach einem der Ansprüche 1 bis 3, **dadurch gekennzeichnet, dass** die ersten und/oder die zweiten Nuten (13, 16) einen bogenförmigen Verlauf aufweisen.

5. Lamellenkupplung (1) nach einem der Ansprüche 1 bis 4, **dadurch gekennzeichnet, dass** die ersten Reibbeläge (6) aus einem zum Werkstoff der zweiten Reibbeläge (8) unterschiedlichen Werkstoff bestehen.

6. Lamellenkupplung (1) nach Anspruch 5, **dadurch gekennzeichnet, dass** die zweiten Reibbeläge (8) aus einem im Vergleich zum Werkstoff der ersten Reibbeläge (6) verschleißfesteren Werkstoff bestehen.

7. Lamellenkupplung (1) nach einem der Ansprüche 1 bis 6, **dadurch gekennzeichnet, dass** die zweiten Reibbeläge (8) eine größere Schichtdicke aufweisen, als die ersten Reibbeläge (6).

8. Lamellenkupplung (1) nach einem der Ansprüche 1 bis 7, **dadurch gekennzeichnet, dass** der erste Reibbelag (6) durch erste Reibbelagsegmente (18) gebildet ist, wobei in jedem der ersten Reibbelagsegmente (18) zumindest eine dritte Nut (19) und mehrere vierte Nuten (20) ausgebildet sind, wobei sich die zumindest eine dritte Nut (19)von einer radial inneren Stirnfläche (21) der ersten Reibbelagsegmente (18) in Richtung auf eine radial äußere Stirnfläche (22) der ersten Reibbelagsegmente (18) erstreckt und beabstandet zur radial äußeren Stirnfläche (22) endet, und wobei die vierten Nuten (20) eine maximale Breite (24) in Umfangsrichtung (15) aufweisen, die zwischen 1 % und 20 % einer maximalen Breite (25) der dritten Nut (19) in gleicher Richtung beträgt und wobei sich die vierten Nuten (20) ununterbrochen und unverzweigt von der radial inneren Stirnfläche (21) der ersten Reibbelagsegmente (18) bis in die radial äußeren Stirnfläche (22) der ersten Reibbelagsegmente (18) erstrecken.

9. Lamellenkupplung (1) nach einem der Ansprüche 1 bis 8, **dadurch gekennzeichnet, dass** der zweite Reibbelag (8) durch zweite Reibbelagsegmente gebildet ist, wobei in jedem der zweiten Reibbelagsegmente mehrere fünfte Nuten ausgebildet sind, wobei die fünften Nuten eine maximale Breite in Umfangsrichtung aufweisen, die zwischen 1 % und 20 % einer maximalen Breite der zweiten Nut (16) in gleicher Richtung beträgt und wobei sich die fünften Nuten ununterbrochen und unverzweigt von der radial inneren Stirnfläche der zweiten Reibbelagsegmente bis in die radial äußeren Stirnfläche der zweiten Reibbelagsegmente erstrecken.

10. Lamellenkupplung (1) nach Anspruch 8 oder 9, **dadurch gekennzeichnet, dass** die vierten Nuten (20) und/oder fünften Nuten einen dreieckförmigen Querschnitt aufweisen.

11. Lamellenkupplung (1) nach einem der Ansprüche 8 bis 10, **dadurch gekennzeichnet, dass** eine sechste Nut (31) an dem radial äußeren Ende der dritten Nut (19) anschließend angeordnet ist, und sich sechste Nut (31) bis in die radial äußere Stirnfläche (22) der ersten Reibbelagssegmente (18) erstreckt und/oder dass eine siebte Nut an dem radial äußeren Ende der zweiten Nut (16) anschließend angeordnet ist, und sich die siebte dritte Nut bis in die radial äußere Stirnfläche der zweiten Reibbelagsegmente erstreckt.

12. Lamellenkupplung (1) nach Anspruch 10 oder 11, **dadurch gekennzeichnet, dass** die sechste Nut (31) eine maximale Breite in Umfangsrichtung (15) aufweist, die zwischen 1 % und 20 % einer maximalen Breite (25) der dritten Nut (21) in gleicher Richtung beträgt und/oder dass die siebte Nut eine maximale Breite in Umfangsrichtung (15) aufweist, die zwischen 1 % und 20 % einer maximalen Breite der zweiten Nut (16) in gleicher Richtung beträgt.

13. Lamellenkupplung (1) nach einem der Ansprüche 8 bis 12, **dadurch gekennzeichnet, dass** die dritte Nut (19) mit einem sich in Richtung auf die radial innere Stirnfläche (21) der ersten Reibbelagssegmente (18) erweiternden Querschnitt ausgebildet ist und/oder dass die zweite Nut (16) mit einem sich in Richtung auf die radial innere Stirnfläche der zweiten Reibbelagssegments erweiternden Querschnitt ausgebildet ist.

14. Lamellenkupplung (1) nach einem der Ansprüche 8 bis 13, **dadurch gekennzeichnet, dass** die dritte Nut (19) im Bereich des radial äußeren Endes mit einer Querschnittserweiterung (32) ausgebildet ist und/oder dass die zweite Nut (16) im Bereich des radial äußeren Endes mit einer Querschnittserweiterung ausgebildet ist.

15. Lamellenkupplung (1) nach Anspruch 14, **dadurch gekennzeichnet, dass** die dritte Nut (19) zumindest annähernd pilzförmig ausgebildet ist und/oder dass die zweite Nut (16) zumindest annähernd pilzförmig ausgebildet ist.

16. Lamellenkupplung (1) nach einem der Ansprüche 1 bis 15, **dadurch gekennzeichnet, dass** auf dem Innenlamellengrundkörper (5) zumindest zwei erste Reibbeläge (6) in einem radialen Abstand (34) angeordnet sind, wobei der radiale Abstand (34) größer ist als eine radiale Breite (35) des zweiten Reibbelags (8) oder der zweiten Reibbeläge (8), sodass der zweite Reibbelag (8) oder die zweiten Reibbeläge (8) bei geschlossener Lamellenkupplung (1) zwischen die ersten Reibbeläge (6) eingreifen kann oder können.

17. Lamellenkupplung (1) nach einem der Ansprüche 1 bis 15, **dadurch gekennzeichnet, dass** auf dem Außenlamellengrundkörper (7) zumindest zwei zweite Reibbeläge (8) in einem radialen Abstand angeordnet sind, wobei der radiale Abstand größer ist als eine radiale Breite des ersten Reibbelags (6) oder der ersten Reibbeläge (6), sodass der erste Reibbelag (6) oder die ersten Reibbeläge (6) bei geschlossener Lamellenkupplung (1) zwischen die zweiten Reibbeläge (6) eingreifen kann oder können.

## Claims

1. A wet-running disc clutch (1) comprising a plurality of inner discs (2) and a plurality of outer discs (3) arranged alternately in the axial direction, wherein each inner disc (2) has an inner disc base body (5) on which a first friction lining (6) is arranged on both sides, and each outer disc (3) has an outer disc base body (7) , on which a second friction lining (8) is arranged on both sides, and wherein the first friction linings (6) are situated entirely below the second friction linings (8) in the radial direction, so that the first friction linings (6) come into frictional contact with the outer plate bodies (7) when the disc clutch (1) is closed, and the second friction linings (8) come into frictional contact with the inner plate bodies (5) when the disc clutch (1) is closed, wherein the first friction linings (6) each have first grooves (13) with a groove depth of up to 100% of a friction lining thickness of the first friction linings (6) and the second friction linings (8) optionally have second grooves (16), **characterized in that** the second friction linings (8) are configured annularly as closed rings with a lining thickness that is constant over the entire circumference, or that, in the case where the second friction linings (8) have the second grooves (16), these second grooves (16) have a smaller cross-sectional area, as viewed in the longitudinal direction of the second grooves (16), than the first grooves (13), as viewed in the same direction.

2. The disc clutch (1) according to claim 1, **characterized in that** the first and/or the second grooves (13, 16) are configured to be oblique to the radial direction (9).

3. The disc clutch (1) according to claim 2, **characterized in that** the first and/or the second grooves (13, 16) are formed to extend being inclined at an angle (17) of between 1° and 30° to the radial direction (9).

4. The disc clutch (1) according to one of claims 1 to 3, **characterized in that** the first and/or the second grooves (13, 16) have an arcuate course.

5. The disc clutch (1) according to one of claims 1 to 4, **characterized in that** the first friction linings (6) are made of a material different from the material of the second friction linings (8).

6. The disc clutch (1) according to claim 5, **characterized in that** the second friction linings (8) are made of a material that is more wear-resistant than the material of the first friction linings (6).

7. The disc clutch (1) according to one of claims 1 to 6, **characterized in that** the second friction linings (8) have a greater layer thickness than the first friction linings (6).

8. The disc clutch (1) according to one of claims 1 to 7, **characterized in that** the first friction lining (6) is formed by first friction lining segments (18), wherein at least one third groove (19) and a plurality of fourth grooves (20) are formed in each of the first friction lining segments (18), wherein the at least one third groove (19) extends from a radially inner end face (21) of the first friction lining segments (18) in the direction of a radially outer end face (22) of the first friction lining segments (18) and ends at a distance from the radially outer end face (22), and wherein the fourth grooves (20) have a maximum width (24) in the circumferential direction (15) which is between 1% and 20% of a maximum width (25) of the third groove (19) in the same direction, and wherein the fourth grooves (20) extend uninterruptedly and unbranched from the radially inner end face (21) of the first friction lining segments (18) into the radially outer end face (22) of the first friction lining segments (18).

9. The disc clutch (1) according to one of claims 1 to 8, **characterized in that** the second friction lining (8) is formed by second friction lining segments, wherein a plurality of fifth grooves are formed in each of the second friction lining segments, wherein the fifth grooves have a maximum width in the circumferential direction which is between 1% and 20% of a maximum width of the second groove (16) in the same direction, and wherein the fifth grooves extend uninterruptedly and unbranched from the radially inner end face of the second friction lining segments to the radially outer end face of the second friction lining segments.

10. The disc clutch (1) according to claim 8 or 9, **characterized in that** the fourth grooves (20) and/or the fifth grooves have a triangular cross-section.

11. The disc clutch (1) according to one of claims 8 to 10, **characterized in that** a sixth groove (31) is arranged adjoining the radially outer end of the third groove (19), and the sixth groove (31) extends into the radially outer end face ( 22) of the first friction lining segments (18) and/or that a seventh groove is arranged adjoining the radially outer end of the second groove (16), and the seventh groove extends into the radially outer end face of the second friction lining segments.

12. The disc clutch (1) according to claim 10 or 11, **characterized in that** the sixth groove (31) has a maximum width in the circumferential direction (15) which is between 1% and 20% of a maximum width (25) of the third groove (21) in the same direction and/or that the seventh groove has a maximum width in the circumferential direction (15) which is between 1% and 20% of a maximum width of the second groove (16) in the same direction.

13. The disc clutch (1) according to one of claims 8 to 12, **characterized in that** the third groove (19) is configured with a cross section that widens in the direction of the radially inner end face (21) of the first friction lining segments (18) and/or that the second groove (16) is configured with a cross section that widens in the direction of the radially inner end face of the second friction lining segment.

14. The disc clutch (1) according to one of claims 8 to 13, **characterized in that** the third groove (19) is configured with a cross-sectional widening (32) in the region of the radially outer end and/or that the second groove (16) is configured with a cross-sectional widening in the region of the radially outer end.

15. The disc clutch (1) according to claim 14, **characterized in that** the third groove (19) is at least approximately mushroom-shaped and/or **in that** the second groove (16) is at least approximately mushroom-shaped.

16. The disc clutch (1) according to one of claims 1 to 15, **characterized in that** at least two first friction linings (6) are arranged on the inner disc base body (5) at a radial distance (34), wherein the radial distance (34) is greater than a radial width (35) of the second friction lining (8) or of the second friction linings (8), so that the second friction lining (8) or the second friction linings (8) can engage between the first friction linings (6) when the disc clutch (1) is closed.

17. The disc clutch (1) according to one of claims 1 to 15, **characterized in that** at least two second friction linings (8) are arranged on the outer disc base body (7) at a radial distance, wherein the radial distance is greater than a radial width of the first friction lining (6) or of the first friction linings (6), so that the first friction lining (6) or the first friction linings (6) can engage between the second friction linings (8) when the disc clutch (1) is closed.

## Revendications

1. Embrayage à disques de type humide (1) comprenant plusieurs disques internes (2) et plusieurs disques externes (3), qui sont disposés de manière alternée dans la direction axiale, dans lequel chaque disque interne (2) comprend un corps de base de disque interne (5) sur chacun des deux côtés duquel est disposée une première garniture de friction (6) et chaque disque externe (3) comprend un corps de base de disque externe (7) sur chacun des deux côtés duquel est disposée une deuxième garniture de friction (8) et dans lequel les premières garnitures de friction (6) sont situées, dans la direction radiale, entièrement en dessous des deuxièmes garnitures de friction (8), de sorte que, lorsque l'embrayage à disques (1) est fermé, les premières garnitures de friction (6) entrent en contact par friction avec les corps de base de disques externes (7) et, lorsque l'embrayage à disques (1) est fermé, les deuxièmes garnitures de friction (8), entrent en contact par friction avec les corps de base de disques internes (5), dans lequel les premières garnitures de friction (6) présentent chacune des premières rainures (13) avec une profondeur de rainure représentant jusqu'à 100 % d'une épaisseur de garniture de friction des premières garnitures de friction (6) et les deuxièmes garnitures de friction (8) présentent, le cas échéant, des deuxièmes rainures (16), **caractérisé en ce que** les deuxièmes garnitures de friction (8) sont réalisées sous une forme annulaire comme des anneaux fermés, avec une épaisseur de garniture constante sur toute la circonférence ou **en ce que**, dans le cas où les deuxièmes garnitures de friction (8) présentent les deuxièmes rainures (16), ces deuxièmes rainures (16) présentent, vues dans l'extension longitudinale des deuxièmes rainures (16), une surface de section transversale plus petite, que celle des premières rainures (13), vues dans la même direction.

2. Embrayage à disques (1) selon la revendication 1, **caractérisé en ce que** les premières et/ou les deuxièmes rainures (13, 16) sont réalisées de manière oblique par rapport à la direction radiale (9).

3. Embrayage à disques (1) selon la revendication 2, **caractérisé en ce que** les premières et/ou les deuxièmes rainures (13, 16) sont réalisées de manière inclinée avec un angle (17) entre 1° et 30° par rapport à la direction radiale (9).

4. Embrayage à disques (1) selon l'une des revendications 1 à 3, **caractérisé en ce que** les premières et/ou les deuxièmes rainures (13, 16) présentent une extension en forme d'arc de cercle.

5. Embrayage à disques (1) selon l'une des revendications 1 à 4, **caractérisé en ce que** les premières garnitures de friction (6) sont constituées d'un matériau différent de celui des deuxièmes garnitures de friction (8).

6. Embrayage à disques (1) selon la revendication 5, **caractérisé en ce que** les deuxièmes garnitures de friction (8) sont constituées d'un matériau plus résistant à l'usure que le matériau des premières garnitures de friction (6).

7. Embrayage à disques (1) selon l'une des revendications 1 à 6, **caractérisé en ce que** les deuxièmes garnitures de friction (8) présentent une épaisseur de couche plus grande que les premières garnitures de friction (6).

8. Embrayage à disques (1) selon l'une des revendications 1 à 7, **caractérisé en ce que** la première garniture de friction (6) est constituée de premiers segments de garniture de friction (18), dans lequel, dans chacun des premiers segments de garniture de friction (18), sont réalisées au moins une troisième rainure (19) et plusieurs quatrièmes rainures (20), dans lequel l'au moins une troisième rainure (19) s'étend d'une face frontale radialement interne (21) des premiers segments de garniture de friction (18) en direction d'une face frontale radialement externe (22) des premiers segments de garniture de friction (18) et se termine de manière distante par rapport à la face frontale radialement externe (22) et dans lequel les quatrièmes rainures (20) présentent une largeur maximale (24) dans la direction de la circonférence (15), qui représente entre 1 % et 20 % d'une largeur maximale (25) de la troisième rainure (19) dans la même direction et dans lequel les quatrièmes rainures (20) s'étendent, de manière ininterrompue et sans bifurcation, de la face frontale radialement interne (21) des premiers segments de garniture de friction (18) jusque dans la face frontale radialement externe (22) des premiers segments de garniture de friction (18).

9. Embrayage à disques (1) selon l'une des revendications 1 à 8, **caractérisé en ce que** la deuxième garniture de friction (8) est constituée de deuxièmes segments de garniture de friction, dans lequel, dans chacun des deuxièmes segments de garniture de friction, sont réalisées plusieurs cinquièmes rainures, dans lequel les cinquièmes rainures présentent une largeur maximale dans la direction de la circonférence, qui représente entre 1 % et 20 % d'une largeur maximale de la deuxième rainure (16) dans la même direction et dans lequel les cinquièmes rainures s'étendent, de manière ininterrompue et sans bifurcation, de la face frontale radialement interne des deuxièmes segments de garniture de friction jusque dans la face frontale radialement externe des deuxièmes segments de garniture de friction.

10. Embrayage à disques (1) selon la revendication 8 ou 9, **caractérisé en ce que** les quatrièmes rainures (20) et/ou les cinquièmes rainures présentent une section transversale de forme triangulaire.

11. Embrayage à disques (1) selon l'une des revendications 8 à 10, **caractérisé en ce qu'**une sixième rainure (31) est disposée de façon à se raccorder à l'extrémité radialement externe de la troisième rainure (19) et la sixième rainure (31) s'étend jusque dans la face frontale radialement externe (22) des premiers segments de garniture de friction (18) et/ou **en ce qu'**une septième rainure est disposée de façon à se raccorder à l'extrémité radialement externe de la deuxième rainure (16) et la septième rainure jusque dans la face frontale radialement externe des deuxièmes segments de garniture de friction.

12. Embrayage à disques (1) selon la revendication 10 ou 11, **caractérisé en ce que** la sixième rainure (31) présente une largeur maximale dans la direction de la circonférence (15), qui représente entre 1 % et 20 % d'une largeur maximale (25) de la troisième rainure (21) dans la même direction et/ou **en ce que** la septième rainure présente une largeur maximale dans la direction de la circonférence (15), qui représente entre 1 % et 20 % d'une largeur maximale de la deuxième rainure (16) dans la même direction.

13. Embrayage à disques (1) selon l'une des revendications 8 à 12, **caractérisé en ce que** la troisième rainure (19) est réalisée avec une section transversale s'élargissant en direction de la face frontale radialement interne (21) des premiers segments de garniture de friction (18) et/ou **en ce que** la deuxième rainure (16) est réalisée avec une section transversale s'élargissant en direction de la face frontale radialement interne des deuxièmes segments de garniture de friction.

14. Embrayage à disques (1) selon l'une des revendications 8 à 13, **caractérisé en ce que** la troisième rainure (19) est réalisée, au niveau de l'extrémité radialement externe, avec un élargissement de section transversale (32) et/ou **en ce que** la deuxième rainure (16) est réalisée, au niveau de l'extrémité radialement externe, avec un élargissement de section transversale.

15. Embrayage à disques (1) selon la revendication 14, **caractérisé en ce que** la troisième rainure (19) présente au moins approximativement la forme d'un champignon et/ou **en ce que** la deuxième rainure (16) présente au moins approximativement la forme d'un champignon.

16. Embrayage à disques (1) selon l'une des revendications 1 à 15, **caractérisé en ce que**, sur le corps de base de disque interne (5) sont disposés au moins deux premières garnitures de friction (6) avec une distance radiale (34), dans lequel la distance radiale (34) est supérieure à une largeur radiale (35) de la deuxième garniture de friction (8) ou des deuxièmes garnitures de friction (8), de sorte que la deuxième garniture de friction (8) ou les deuxièmes garnitures de friction (8) peut/peuvent s'emboîter entre les premières garnitures de friction (6) lorsque l'embrayage à disques (1) est fermé.

17. Embrayage à disques (1) selon l'une des revendications 1 à 15, **caractérisé en ce que**, sur le corps de base de disque externe (7) sont disposés au moins deux deuxièmes garnitures de friction (8) avec une distance radiale, dans lequel la distance radiale est supérieure à une largeur radiale de la première garniture de friction (6) ou des premières garnitures de friction (6), de sorte que la première garniture de friction (6) ou les premières garnitures de friction (6) peut/peuvent s'emboîter entre les deuxièmes garnitures de friction (6) lorsque l'embrayage à disques (1) est fermé.
